# EUROPEAN PATENT SPECIFICATION

(11) **EP 1 995 816 B1**
(45) Date of publication and mention of the grant of the patent: **12.08.2015**
(21) Application number: 06722076.4
(22) Date of filing: 20.03.2006
(51) Int. Cl.: H01M 2/26, H01M 2/02, H01M 10/38, H01M 2/22, H01M 10/058

(54) **A SOFT PACKAGED AND HIGH CAPACITY LITHIUM ION BATTERY AND THE MANUFACTURE METHOD OF THE SAME**
WEICHGEKAPSELTE UND HOCHKAPAZITIVE LITHIUMIONENBATTERIE UND HERSTELLUNGSVERFAHREN DAFÜR
BATTERIE LITHIUM-ION HAUTE CAPACITÉ À EMBALLAGE SOUPLE ET SON PROCÉDÉ DE PRODUCTION

(43) Date of publication of application: 26.11.2008
(73) Proprietor: Citic Guoan Mengguli New Energy Technology Co., Ltd., Changping District Beijing 102200 (CN)
(72) Inventor: YUE, Zai, Beijing 102200 (CN); XU, Hua, Beijing 102200 (CN); WU, Ningning, Beijing 102200 (CN); LEI, Xiangli, Beijing 102200 (CN); QI, Lu, Beijing 102200 (CN)
(74) Representative: Herrmann, Uwe
(86) International application number: PCT/CN2006/000424
(87) International publication number: WO 2007/107037

(56) References cited:
- CN-A- 1 540 785
- CN-A- 1 540 792
- CN-Y- 2 686 105
- JP-A- 2002 075 324
- US-B1- 6 316 142

## Description

### Technical Field

This invention relates to a power battery field, especially to a soft package lithium ion power battery with high capacity (more than 30Ah).

### Background Art

A lithium ion power battery with high capacity (more than 30Ah) produced at present is generally packaged with hard shell (metal or thick-wall plastic), which has advantages like having electrode posts (or electrode tabs) leaded from a battery core through which high current can pass , and a safety valve easy for position; and disadvantages like low safety coefficient of the safety valve, which is liable to cause safety accident such as explosion, once the battery is internal short-circuited, over charged or has accidental collision and extrusion. Moreover, the battery packaged with such materials has a heavy shell and is of low energy-weight ratio, it also needs a complicated process and great investment in equipment. In order to avoid the above disadvantages of the battery with hard shell package, people have tried to package lithium ion batteries with aluminum-plastic complex film, which has been widely applied in low capacity batteries. However, if the following processes adopted by low capacity batteries are still used in high capacity (more than 30Ah) lithium ion batteries, for example, winding a battery core for a single sheet and single electrode tab, or punching pole plates and separators and laminating them layer by layer to form a battery core, it is difficult to satisfy the requirements of low battery internal resistance and high current charging-discharging.

### Summary of the Invention

The object of this invention is to provide a simple method for manufacturing a soft package lithium ion battery with high capacity, low internal resistance, good safety, and being suitable to use in high current charging-discharging.

In order to realize the above object, this invention provides a soft package lithium ion battery with high capacity, comprising a battery core, a soft package shell for packaging said battery core, an electrolyte accommodated in said shell, and electrode tabs connected to said battery core and leaded to external of said shell.

Said battery core comprises a plurality of positive pole plates and a plurality of negative pole plates, and said positive pole plates and negative pole plates are long type metal sheets with substantially identical shape, and are divided into coating regions and non-coating regions along their length direction respectively, and both faces of said coating regions of said positive pole plates are coated with positive pole active material, and both faces of said coating regions of said negative pole plates are coated with negative pole active material; the size of said coating regions of said positive pole plates is substantially the same as that of said coating regions of said negative pole plates, and said coating regions extend substantially straightly and flatly, with the extension length of said coating regions being substantially consistent with the width of the battery core required.

Said coating regions of said plurality of positive pole plates and said coating regions of said plurality of negative pole plates are aligned substantially regularly and laminated alternatively to form a lamination structure, wherein a separator is arranged between said coating regions of said positive pole plate and said coating region of said negative pole plate.

Said uncoated regions of said plurality of positive pole plates extend from one side of said lamination structure, and turn over to extend to a top surface of said lamination structure; Said uncoated regions of said plurality of negative pole plates extend from the other opposite side of said lamination structure, and likewise turn over to extend to the top surface of said lamination structure.

Two electrode tabs made of metal sheets are provided on said top surface of said lamination structure, and said two electrode tabs are connected to said uncoated regions of said plurality of positive pole plates and said uncoated regions of said plurality of negative pole plates respectively.

This invention further provides a method for manufacturing a soft package lithium ion battery with high capacity, comprising steps of:
a) providing a plurality of straight and flat positive pole plates and a plurality of straight and flat negative pole plates, said positive pole plates and negative pole plates are long type metal sheets with substantially identical shape, and are divided into coating regions and non-coating regions along their length direction respectively, and both faces of said coating regions of said positive pole plates are coated with positive pole active material, and both faces of said coating regions of said negative pole plates are coated with negative pole active material; the size of said coating regions of said positive pole plates is substantially the same as that of said coating regions of said negative pole plates, and the extension length of said coating regions is substantially consistent with the width of the battery core required;
b) wrapping said coating regions of said plurality of positive pole plates or said coating regions of said plurality of negative pole plates with separators; said separators are U-shaped with a transverse opening, and wrap the upper surface, lower surface and an end of said coating region;
c) aligning said coating regions of said plurality of positive pole plates and said coating regions of said plurality of negative pole plates substantially regularly and laminating alternatively to form a lamination structure; wherein all said uncoated regions of said plurality of positive pole plates extend from one side of said lamination structure, and all said uncoated regions of said plurality of negative pole plates extend from the other opposite side of said lamination structure;
d) connecting the uncoated regions of two sides of said lamination structure to the electrode tabs respectively;
e) turning over said uncoated regions of two sides of said lamination structure along with said electrode tabs connected thereto to a top surface of said lamination structure so as to form a battery core;
f) packaging said ready-made battery core with soft package shell; said packaging process including injecting electrolyte into said shell.

For the soft package lithium ion battery with high capacity of this invention, the capacity of said battery can be determined by the size and number of pole plates provided that the densities of the positive and negative pole plates are predetermined. In this invention, the length of the coating regions is selected to be substantially consistent with the width of the battery core required, so it is no need to wind the coating regions, which makes manufacture simple. Moreover, the aluminum thin sheets used in the soft package lithium ion battery with high capacity of this invention are large in area, and the positive and negative electrode tabs are sufficiently contacted with the positive and negative electrode current collectors in large area, thus the cost is decreased, the packaging process is simplified, the internal resistance of the battery is reduced as well, and it is allowed for high current to be charged-discharged as compared with the commonly used nickel electrode tabs. Further, the method for manufacturing the soft package lithium ion battery with high capacity of this invention is simple in fabrication, low in cost and internal resistance of battery, and the resultant battery has a good safety and electrical performance.

### Brief Description of the Drawings

Fig. 1 is a sectional view of the battery of this invention;
Fig.2 is a planform of Figure 1;
Fig.3 is a side view of Figure 1;
Fig.4 is a schematic drawing of the positive pole plate of this invention;
Fig.5 is a schematic drawing of the negative pole plate of this invention;
Fig.6 is a schematic drawing of the separator of this invention;
Fig.7 is a plan drawing of the electrode tab of this invention.

### Embodiments of Carrying Out the Invention

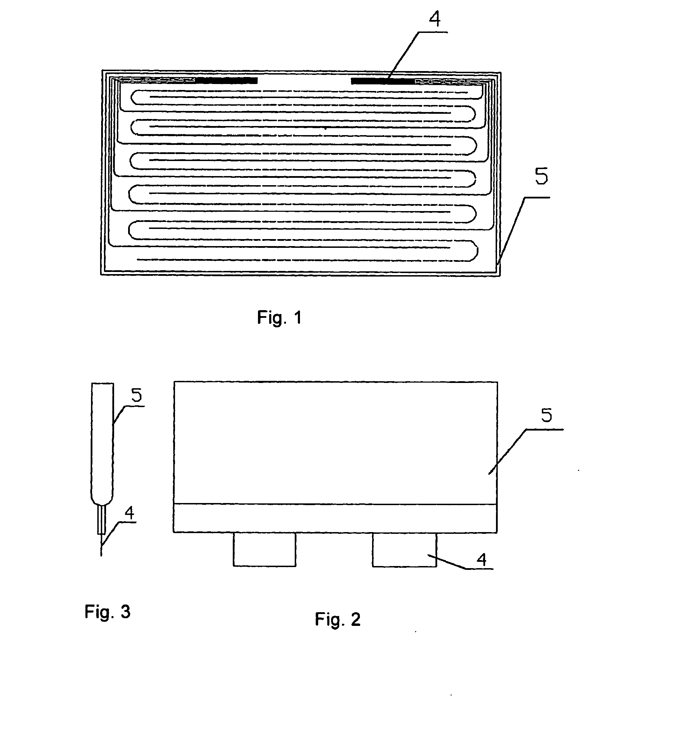

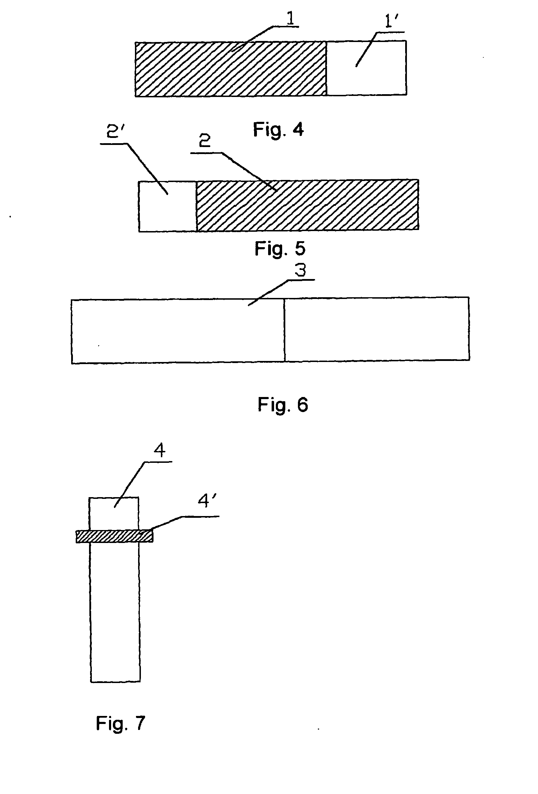

Referring to Figs. 1 to 3, a soft package lithium ion battery with high capacity of this invention comprises a battery core, a soft package shell 5 for packaging said battery core, an electrolyte (not shown) accommodated in said shell 5, and electrode tabs 4 connected to the battery core and leaded to external of the shell. As shown in Fig.7, both of the positive and negative electrode tabs 4 are formed by applying a hot melt adhesive film 4' on an aluminum thin sheet. The battery core comprises a plurality of positive pole plates and a plurality of negative pole plates, wherein the positive pole plates are made of aluminum foil, and the negative pole plates are made of copper foil. The positive pole plate and negative pole plate respectively shown in Figs. 4 and 5 are long type metal sheets with substantially identical shape. The positive pole plate is divided into a coating region 1 (the shadow area) and a non-coating region (or current collector) 1' along its length direction, and the negative pole plate is divided into a coating region 2 (the shadow area) and a non-coating region (or current collector) 2' along its length direction, wherein the current collector 1' and current collector 2' are used for connecting electrode tabs 4. Both faces of the coating regions 1 of said positive pole plates are coated with positive active material, and both faces of the coating regions 2 of said negative pole plates are coated with negative active material. It can be seen from Fig.2, 4 and 5 that the size of the coating regions 1 of said positive pole plates is substantially (slight difference is allowed) the same as that of the coating regions 2 of said negative pole plates, and both of the coating regions extend substantially straightly and flatly, with the extension length of said coating regions 1 and 2 being substantially consistent with the width of the battery core required (Fig. 1).

The coating regions 1 of said plurality of positive pole plates and the coating regions 2 of said plurality of negative pole plates are aligned substantially regularly and laminated alternatively to form a lamination structure, wherein a separator 3 is arranged between the coating regions 1 of the positive pole plates and the coating regions 2 of the negative pole plates. The separator 3, being U-shaped with a transverse opening in a ready-made battery core, wraps the upper surface, the lower surface and one end of the coating region 1 of the positive pole plate or of the coating region 2 of the negative pole plate. Fig. 6 is an expanded schematic drawing of the separator 3, which can be folded along the dotted line showed in the drawing to become U-shaped when in use.

The uncoated region 1' of said positive pole plate extends from one side of said lamination structure, and turns over to extend to a top surface of said lamination structure; the uncoated region 2' of said negative pole plate extends from the other opposite side of said lamination structure, and likewise turns over to extend to the top surface of said lamination structure. The uncoated regions 1' and 2' turned over to the top surface of the lamination structure are connected to two electrode tabs 4 respectively, i.e., positive electrode tab and negative electrode tab.

When the separators 3 wrap the coating regions 1 of the positive pole plates, the number of the positive pole plates may be one more than that of the negative pole plates, thus, the outermost pole plates of the lamination structure are positive pole plates, so that the exposed separators 3 are in the uppermost and lowermost of the lamination structure. When the separators 3 wrap coating regions 2 of the negative pole plates, the number of the negative pole plates may be one more than that of the positive pole plates, thus, the outermost pole plates of the lamination structure are negative pole plates, so that the exposed separators 3 are in the uppermost and lowermost of the lamination structure.

A few applicable embodiments of the soft package lithium ion battery with high capacity of this invention will be described as follows.

### Embodiment 1: Fabrication of a 100Ah soft package lithium ion battery.

As shown in Fig.4, 40 positive pole plates made of aluminum foil with the thickness of 0.012mm are adopted. The positive active material is coated on both faces of a part region of the positive pole plate to form a coating region 1. The length of the coating region 1 is 300mm, the width is 230mm, and the total thickness including the coating material is 0.15mm. The remaining region in the positive pole plate is an uncoated region, i.e., current collector 1', with a length of 140mm, a width of 230mm. As shown in Fig.5, 41 negative pole plates made of 0.012mm thick copper foil are further adopted. The negative active material is coated on both faces of a part region of the negative pole plate to form a coating region 2. The length of the coating region 2 of the negative pole plate is 302mm, the width is 232mm, and the total thickness including the coating material is 0.15mm. The remaining region in the negative pole plate is an uncoated region, i.e., current collector 2', with a length of 140mm, a width of 232mm. As shown in Fig.6, 41 separators 3 are further adopted, each of which having 610mm in length and 236mm in width. The separator 3 is folded along the middle dotted line and wraps the negative pole plate. Then, the coating region 1 of the positive pole plate and the coating region 2 of the wrapped negative pole plate are aligned regularly, and the uncoated current collectors 1' and 2' are placed on the left and right sides respectively and laminated alternatively plate by plate. The laminated current collectors 1' and 2' are connected to the positive and negative electrode tabs 4 respectively by the way of welding of an ultrasonic bonder or riveting. As shown in Fig.7, the electrode tab 4 is made of aluminum thin sheet with a thickness of 0.3mm, a width of 100mm, and a total length of 350mm. At the location of 235mm of the aluminum sheet of the electrode tab 4, one strip of hot melt adhesive 4' with 30mm in width and 110mm in length is stuck on each of the front and back faces of the electrode tab 4 along transverse direction. The positive and negative current collectors 1' and 2' connected to the electrode tabs 4 are laid on the surface of the laminated pole plate after being folded twice by 90° relative to each other, and then fixed with high-temperature adhesive tape to form a battery core. The battery core is packaged with shell 5 made of aluminum-plastic complex film. During the packaging, a small opening is reserved on the shell 5 for injecting electrolyte and open-formation, after which the interior of the battery is pumped to approximate vacuum and then the reserved small opening is thermal sealed, thus, a battery is finished.

### Embodiment 2: Fabrication of a 200Ah soft package lithium ion battery.

As shown in Fig.4, 40 positive pole plates made of aluminum foil with the thickness of 0.012mm are adopted. The positive active material is coated on both faces of a part region of the positive pole plate to form a coating region 1. The length of the coating region 1 is 600mm, the width is 230mm, and the total thickness including the coating material is 0.15mm. The remaining region in the positive pole plate is an uncoated region, i.e., current collector 1', with a length of 140mm, a width of 230mm. As shown in Fig.5, 41 negative pole plates made of 0.012mm thick copper foil are further adopted. The negative active material is coated on both faces of a part region of the negative pole plate to form a coating region 2. The length of the coating region 2 of the negative pole plate is 602mm, the width is 232mm, and the total thickness including the coating material is 0.15mm. The remaining region in the negative pole plate is an uncoated region, i.e., current collector 2', with a length of 140mm, a width of 232mm. As shown in Fig.6, 41 separators 3 are further adopted, each of which having 1220mm in length and 236mm in width. The separator 3 is folded along the middle dotted line and wraps the negative pole plate. Then, the coating region 1 of the positive pole plate and the coating region 2 of the wrapped negative pole plate are aligned regularly, and the uncoated current collectors 1' and 2' are placed on the left and right sides respectively and laminated alternatively plate by plate. The laminated current collectors 1' and 2' are connected to the positive and negative electrode tabs 4 respectively by the way of welding of an ultrasonic bonder or riveting. As shown in Fig.7, the electrode tab 4 is made of aluminum thin sheet with a thickness of 0.3mm, a width of 100mm, and a total length of 350mm. At the location of 235mm of the aluminum sheet of the electrode tab 4, one strip of hot melt adhesive 4' with 30mm in width and 110mm in length is stuck on each of the front and back faces of the electrode tab 4 along transverse direction. The remaining fabrication steps are completely the same as those of the embodiment 1.

### Embodiment 3: Fabrication of a 50Ah soft package lithium ion battery.

20 positive pole plates, 21 negative pole plates and 21 separators 3 are adopted, with the length, width, thickness thereof, as well as the fabricating method and steps thereof being the same as those described in the embodiment 1.

## Claims

1. A soft package lithium ion battery with high capacity, comprising a battery core, a soft package shell for packaging said battery core, an electrolyte accommodated in said shell, and electrode tabs connected to said battery core and leaded to external of said shell; **characterized in that**
said battery core comprises a plurality of positive pole plates and a plurality of negative pole plates, and said positive pole plates and negative pole plates are long type metal sheets with substantially identical shape, and are divided into coating regions and non-coating regions along their length direction respectively, and both faces of said coating regions of said positive pole plates are coated with positive active material, and both faces of said coating regions of said negative pole plates are coated with negative active material; the size of said coating regions of said positive pole plates is substantially the same as that of said coating regions of said negative pole plates, and said coating regions extend substantially straightly and flatly, with the extension length of said coating regions being substantially consistent with the width of the battery core required;
said coating regions of said plurality of positive pole plates and said coating regions of said plurality of negative pole plates are aligned substantially regularly and laminated alternatively to form a lamination structure, wherein a separator is arranged between said coating region of said positive pole plate and said coating region of said negative pole plate;
said uncoated regions of said plurality of positive pole plates extend from one side of said lamination structure, and turn over to extend to a top surface of said lamination structure; said uncoated regions of said plurality of negative pole plates extend from the other opposite side of said lamination structure, and likewise turn over to extend to the top surface of said lamination structure;
two electrode tabs made of metal sheets are provided on said top surface of said lamination structure, and said two electrode tabs are connected to said uncoated regions of said plurality of positive pole plates and said uncoated regions of said plurality of negative pole plates respectively.

2. The soft package lithium ion battery with high capacity of claim 1, **characterized in that** said separator being U-shaped with a transverse opening wraps the upper surface, the lower surface and an end of said coating region of said positive pole plate or negative pole plate.

3. The soft package lithium ion battery with high capacity of claim 2, **characterized in that**
when said separator wraps said coating region of said positive pole plate, the number of said positive pole plates is one more than that of said negative pole plates, so that the outermost pole plates of said lamination structure are all positive pole plates; or
when said separator wraps said coating region of said negative pole plate, the number of said negative pole plates is one more than that of said positive pole plates, so that the outermost pole plates of the lamination structure are all negative pole plates.

4. The soft package lithium ion battery with high capacity of claim 1, **characterized in that** said positive pole plate is aluminum foil, said negative pole plate is copper foil, and said electrode tab is aluminum thin sheet.

5. The soft package lithium ion battery with high capacity of claim 4, **characterized in that** said electrode tab is disposed in parallel to the top surface of said lamination structure.

6. The soft package lithium ion battery with high capacity of claim 4, **characterized in that** said electrode tab is provided with a hot melt adhesive film.

7. A method for manufacturing a soft package lithium ion battery with high capacity, comprising steps of:
a) providing a plurality of straight and flat positive pole plates and a plurality of straight and flat negative pole plates, said positive pole plates and negative pole plates are long type metal sheets with substantially identical shape, and are divided into coating regions and non-coating regions along their length direction respectively, and both faces of said coating regions of said positive pole plates are coated with positive active material, and both faces of said coating regions of said negative pole plates are coated with negative active material; the size of said coating regions of said positive pole plates is substantially the same as that of said coating regions of said negative pole plates, and the extension length of said coating regions is substantially consistent with the width of the battery core required;
b) wrapping said coating regions of said plurality of positive pole plates or said coating regions of said plurality of negative pole plates with separators; said separators are U-shaped with a transverse opening, and wrap the upper surface, lower surface and an end of said coating region;
c) aligning said coating regions of said plurality of positive pole plates and said coating regions of said plurality of negative pole plates substantially regularly and laminating alternatively to form a lamination structure; wherein all said uncoated regions of said plurality of positive pole plates extend from one side of said lamination structure, and all said uncoated regions of said plurality of negative pole plates extend from the other opposite side of said lamination structure;
d) connecting the uncoated regions of two sides of said lamination structure to the electrode tabs respectively;
e) turning over said uncoated regions of two sides of said lamination structure along with said electrode tabs connected thereto to a top surface of said lamination structure so as to form a battery core;
f) packaging said ready-made battery core with a soft package shell; said packaging process including injecting electrolyte into said shell.

8. The method for manufacturing a soft package lithium ion battery with high capacity of claim 7, **characterized in that**,
when said separator wraps said coating region of said positive pole plate, the number of said positive pole plates is one more than that of said negative pole plates, so that the outermost pole plates of said lamination structure are all positive pole plates; or
when said separator wraps said coating region of said negative pole plate, the number of the negative pole plates is one more than that of said positive pole plates, so that the outermost pole plates of said lamination structure are all negative pole plates.

9. The method for manufacturing a soft package lithium ion battery with high capacity of claim 7 or 8, **characterized in that**,
said positive pole plate is aluminum foil, said negative pole plate is copper foil, and said electrode tab is aluminum sheet.

10. The method for manufacturing a soft package lithium ion battery with high capacity of claim 9, **characterized in that**,
said electrode tab is provided with a hot melt adhesive film.

## Patentansprüche

1. Weichverpackte Lithiumionenbatterie mit hoher Leistung, die einen Batteriekern, einen Weichverpackungsmantel zum Verpacken des Batteriekerns, einen in dem Mantel aufgenommenen Elektrolyten und mit dem Batteriekern verbundene Elektrodenfahnen, die außen an den Mantel angelötet sind, umfasst;
**dadurch gekennzeichnet ist, dass**
die Batterie mehrere Pluspolplatten und mehrere Minuspolplatten umfasst und dass die Pluspolplatten und die Minuspolplatten lange Bleche mit im Wesentlichen identischer Form sind und entlang ihrer Längsrichtung jeweils in Beschichtungsbereiche und Nichtbeschichtungsbereiche unterteilt sind und beide Stirnseiten der Beschichtungsbereiche der Pluspolplatten mit positivem aktiven Material beschichtet sind und beiden Stirnseiten der Beschichtungsbereiche der Minuspolplatten mit negativem aktiven Material beschichtet sind; die Größe der Beschichtungsbereiche der Pluspolplatten im Wesentlichen gleich der Beschichtungsbereiche der Minuspolplatten ist und dass sich die Beschichtungsbereiche im Wesentlichen gerade und flach erstrecken, wobei die Erstreckungslänge der Beschichtungsbereiche im Wesentlichen mit der erforderlichen Breite des Batteriekerns übereinstimmt;
die Beschichtungsbereiche der mehreren Pluspolplatten und die Beschichtungsbereiche der mehreren Minuspolplatten im Wesentlichen regelmäßig ausgerichtet sind und abwechselnd laminiert sind, um eine Laminierungsstruktur zu bilden, wobei zwischen dem Beschichtungsbereich der Pluspolplatte und dem Beschichtungsbereich der Minuspolplatte ein Separator angeordnet ist;
sich die unbeschichteten Bereiche der mehreren Pluspolplatten von einer Seite der Laminierungsstruktur erstrecken und umdrehen, um sich zu einer oberen Fläche der Laminierungsstruktur zu erstrecken; sich die unbeschichteten Bereiche der mehreren Minuspolplatten von der anderen gegenüberliegenden Seite der Laminierungsstruktur erstrecken und ebenfalls umdrehen, um sich zu der oberen Fläche der Laminierungsstruktur zu erstrecken;
zwei Elektrodenfahnen aus Blechen auf der oberen Fläche der Laminierungsstruktur vorgesehen sind und dass die zwei Elektrodenfahnen jeweils mit den unbeschichteten Bereichen der mehreren Pluspolplatten und den unbeschichteten Bereichen der mehreren Minuspolplatten verbunden sind.

2. Weich verpackte Lithiumionenbatterie mit hoher Leistung nach Anspruch 1, **dadurch gekennzeichnet, dass** der Separator, der U-förmig mit einer Queröffnung ist, die obere Fläche, die untere Fläche und ein Ende des Beschichtungsbereichs der Pluspolplatte oder Minuspolplatte umwickelt.

3. Weich verpackte Lithiumionenbatterie mit hoher Leistung nach Anspruch 2, **dadurch gekennzeichnet, dass**,
wenn der Separator den Beschichtungsbereich der Pluspolplatte umwickelt, die Anzahl der Pluspolplatten um eins größer als die der Minuspolplatten ist, so dass die äußersten Polplatten der Laminierungsstruktur alle Pluspolplatten sind; oder,
wenn der Separator den Beschichtungsbereich der Minuspolplatte umwickelt, die Anzahl der Minuspolplatten um eins größer als die der Pluspolplatten ist, so dass die äußersten Polplatten der Laminierungsstruktur alle Minuspolplatten sind.

4. Weich verpackte Lithiumionenbatterie mit hoher Leistung nach Anspruch 1, **dadurch gekennzeichnet, dass** die Pluspolplatte Aluminiumfolie ist, die Minuspolplatte Kupferfolie ist und die Elektrodenfahne Aluminiumdünnblech ist.

5. Weich verpackte Lithiumionenbatterie mit hoher Leistung nach Anspruch 4, **dadurch gekennzeichnet, dass** die Elektrodenfahne parallel zu der oberen Fläche der Laminierungsstruktur angeordnet ist.

6. Weich verpackte Lithiumiorienbatterie mit hoher Leistung nach Anspruch 4, **dadurch gekennzeichnet, dass** die Elektrodenfahne mit einem Heißschmelzklebefilm versehen ist.

7. Verfahren zum Herstellen einer weich verpackten Lithiumionenbatterie mit hoher Leistung, welches die folgenden Schritte umfasst:
a) Vorsehen von mehreren geraden und flachen Pluspolplatten und mehreren geraden und flachen Minuspolplatten, die Pluspolplatten und die Minuspolplatten sind lange Bleche mit im Wesentlichen identischer Form und sind entlang ihrer Längsrichtung jeweils in Beschichtungsbereiche und Nichtbeschichtungsbereiche unterteilt und beide Stirnseiten der Beschichtungsbereiche der Pluspolplatten sind mit positivem aktiven Material beschichtet und beiden Stirnseiten der Beschichtungsbereiche der Minuspolplatten sind mit negativem aktiven Material beschichtet; die Größe der Beschichtungsbereiche der Pluspolplatten ist im Wesentlichen gleich der der Beschichtungsbereiche der Minuspolplatten und die Erstreckungslänge der Beschichtungsbereiche stimmt im Wesentlichen mit der erforderlichen Breite des Batteriekerns überein;
b) Umwickeln der Beschichtungsbereiche der mehreren Pluspolplatten oder der Beschichtungsbereiche der mehreren Minuspolplatten mit Separatoren; die Separatoren sind U-förmig mit einer Queröffnung und umwickeln die obere Fläche, die untere Fläche und ein Ende des Beschichtungsbereichs;
c) im Wesentlichen regelmäßiges Ausrichten der Beschichtungsbereiche der mehreren Pluspolplatten und der Beschichtungsbereiche der mehreren Minuspolplatten und abwechselndes Laminieren, um eine Laminierungsstruktur zu bilden; wobei sich all die unbeschichteten Bereiche der mehreren Pluspolplatten von einer Seite der Laminierungsstruktur erstrecken und sich all die unbeschichteten Bereiche der mehreren Minuspolplatten von der anderen gegenüberliegenden Seite der Laminierungsstruktur erstrecken;
d) Verbinden der unbeschichteten Bereiche von zwei Seiten der Laminierungsstruktur jeweils mit den Elektrodenfahnen;
e) Umdrehen der unbeschichteten Bereiche von zwei Seiten der Laminierungsstruktur zusammen mit den damit verbundenen Elektrodenfahnen zu einer oberen Fläche der Laminierungsstruktur, um einen Batteriekern zu bilden;
f) Verpacken des gebrauchsfertigen Batteriekerns mit einem Weichverpackungsmantel; wobei der Verpackungsprozess das Einspritzen eines Elektrolyten in den Mantel umfasst.

8. Verfahren zum Herstellen einer weich verpackten Lithiumionenbatterie mit hoher Leistung nach Anspruch 7,
**dadurch gekennzeichnet, dass**,
wenn der Separator den Beschichtungsbereich der Pluspolplatte umwickelt, die Anzahl der Pluspolplatten um eins größer als die der Minuspolplatten ist, so dass die äußersten Polplatten der Laminierungsstruktur alle Pluspolplatten sind; oder,
wenn der Separator den Beschichtungsbereich der Minuspolplatte umwickelt, die Anzahl der Minuspolplaften um eins größer als die der Pluspolplatten ist, so dass die äußersten Polplatten der Laminierungsstruktur alle Minuspolplatten sind.

9. Verfahren zum Herstellen einer weich verpackten Lithiumionenbatterie mit hoher Leistung nach Anspruch 7 oder 8, **dadurch gekennzeichnet, dass** die Pluspolplatte Aluminiumfolie ist, die Minuspolplatte Kupferfolie ist und die Elektrodenfahne Aluminiumblech ist.

10. Verfahren zum Herstellen einer weich verpackten Lithiumionenbatterie mit hoher Leistung nach Anspruch 9, **dadurch gekennzeichnet, dass** die Elektrodenfahne mit einem Heißschmelzkleberfilm versehen ist.

## Revendications

1. Batterie lithium-ion haute capacité à emballage souple, comprenant un noyau de batterie, une enveloppe d'emballage souple destinée à emballer ledit noyau de batterie, un électrolyte logé dans ladite enveloppe, et des languettes d'électrode connectées audit noyau de batterie et guidées à l'extérieur de ladite enveloppe ;
**caractérisée en ce que**
ledit noyau de batterie comprend une pluralité de plaques polaires positives et une pluralité de plaques polaires négatives, et lesdites plaques polaires positives et plaques polaires négatives sont des tôles de métal de type long avec urie forme sensiblement identique, et sont divisées respectivement en zones de revêtement et zones de non revêtement le long de la direction de leur longueur, et les deux faces desdites zones de revêtement desdites plaques polaires positives sont revêtues de matériau actif positif, et les deux faces desdites zones de revêtement desdites plaques polaires négatives sont revêtues de matériau actif négatif ; la taille desdites zones de revêtement desdites plaques polaires positives est sensiblement la même que celle desdites zones de revêtement desdites plaques polaires négatives, et lesdites zones de revêtement s'étendent sensiblement de manière rectiligne et plate, la longueur d'extension desdites zones de revêtement étant sensiblement en accord avec la largeur du noyau de batterie requise ;
lesdites zones de revêtement de ladite pluralité de plaques polaires positives et lesdites zones de revêtement de ladite pluralité de plaques polaires négatives sont alignées sensiblement de manière régulière et stratifiées en variante pour former une structure stratifiée, un séparateur étant agencé entre ladite zone de revêtement de ladite plaque polaire positive et ladite zone de revêtement de ladite plaque polaire négative ;
lesdites zones non revêtues de ladite pluralité de plaques polaires positives s'étendent depuis un côté de ladite structure stratifiée, et se retournent pour s'étendre jusqu'à une surface supérieure de ladite structure stratifiée ; lesdites zones non revêtues de ladite pluralité de plaques polaires négatives s'étendent depuis l'autre côté opposé de ladite structure stratifiée, et se retournent de même pour s'étendre jusqu'à une surface supérieure de ladite structure stratifiée ;
deux languettes d'électrode fabriquées en tôles de métal se trouvent sur ladite surface supérieure de ladite structure stratifiée, et lesdites deux languettes d'électrode sont connectées respectivement auxdites zones non revêtues de ladite pluralité de plaques polaires positives et auxdites zones non revêtues de ladite pluralité de plaques polaires négatives.

2. Batterie lithium-ion haute capacité à emballage souple selon la revendication 1, **caractérisée en ce que** ledit séparateur qui est en forme de U avec une ouverture transversale enveloppe la surface supérieure, la surface inférieure et une extrémité de ladite zone de revêtement de ladite plaque polaire positive ou plaque polaire négative.

3. Batterie lithium-ion haute capacité à emballage souple selon la revendication 2,
**caractérisée en ce que**,
quand ledit séparateur enveloppe ladite zone de revêtement de ladite plaque polaire positive, le nombre desdites plaques polaires positives est d'une plaque de plus que celui des plaques polaires négatives, de sorte que les plaques polaires les plus à l'extérieur de ladite structure stratifiée sont toutes des plaques polaires positives ; ou
quand ledit séparateur enveloppe ladite zone de revêtement de ladite plaque polaire négative, le nombre desdites plaques polaires négatives est d'une plaque de plus que celui des plaques polaires positives, de sorte que les plaques polaires les plus à l'extérieur de la structure stratifiée sont toutes des plaques polaires négatives.

4. Batterie lithium-ion haute capacité à emballage souple selon la revendication 1, **caractérisée en ce que** ladite plaque polaire positive est de la feuille d'aluminium, ladite plaque polaire négative est de la feuille de cuivre, et ladite languette d'électrode est de la tôle fine d'aluminium.

5. Batterie lithium-ion haute capacité à emballage souple selon la revendication 4, **caractérisée en ce que** ladite languette d'électrode est disposée en parallèle à la surface supérieure de ladite structure stratifiée.

6. Batterie lithium-ion haute capacité à emballage souple selon la revendication 4, **caractérisée en ce que** ladite languette d'électrode est dotée d'un film adhésif thermofusible.

7. Procédé de production d'une batterie lithium-ion haute capacité à emballage souple, comprenant les étapes consistant à :
a) mettre à disposition une pluralité de plaques polaires positives rectilignes et plates et une pluralité de plaques polaires négatives rectilignes et plates, lesdites plaques polaires positives et plaques polaires négatives étant des tôles de métal de type long avec une forme sensiblement identique, et étant divisées respectivement en zones de revêtement et zones de non revêtement le long de la direction de leur longueur, et les deux faces desdites zones de revêtement desdites plaques polaires positives sont revêtues de matériau actif positif, et les deux faces desdites zones de revêtement desdites plaques polaires négatives sont revêtues de matériau actif négatif ; la taille desdites zones de revêtement desdites plaques polaires positives étant sensiblement la même que celle desdites zones de revêtement desdites plaques polaires négatives, et la longueur d'extension desdites zones de revêtement étant sensiblement en accord avec la largeur du noyau de batterie requise ;
b) envelopper lesdites zones de revêtement de ladite pluralité de plaques polaires positives ou lesdites zones de revêtement de ladite pluralité de plaques polaires négatives avec des séparateurs ; lesdits séparateurs étant en forme de U avec une ouverture transversale, et enveloppant la surface supérieure, la surface inférieure et une extrémité de ladite zone de revêtement ;
c) aligner lesdites zones de revêtement de ladite pluralité de plaques polaires positives et lesdites zones de revêtement de ladite pluralité de plaques polaires négatives sensiblement de manière régulière et stratifier en variante pour former une structure stratifiée ; dans lequel toutes lesdites zones non revêtues de ladite pluralité de plaques polaires positives s'étendent depuis un côté de ladite structure stratifiée, et toutes lesdites zones non revêtues de ladite pluralité de plaques polaires négatives s'étendent depuis l'autre côté opposé de ladite structure stratifiée ;
d) connecter les zones non revêtues de deux côtés de ladite structure stratifiée respectivement aux languettes d'électrode ;
e) retourner lesdites zones non revêtues de deux côtés de ladite structure stratifiée conjointement avec lesdites languettes d'électrode connectées à celles-ci sur une surface supérieure de ladite structure stratifiée de manière à former un noyau de batterie ;
f) emballer ledit noyau de batterie préfabriqué avec une enveloppe d'emballage souple ; ledit procédé d'emballage comportant l'injection d'électrolyte dans ladite enveloppe.

8. Procédé de production d'une batterie lithium-ion haute capacité à emballage souple selon la revendication 7,
**caractérisé en ce que**,
quand ledit séparateur enveloppe ladite zone de revêtement de ladite plaque polaire positive, le nombre desdites plaques polaires positives est d'une plaque de plus que celui desdites plaques polaires négatives, de sorte que les plaques polaires les plus à l'extérieur de ladite structure stratifiée sont toutes des plaques polaires positives ; ou
quand ledit séparateur enveloppe ladite zone de revêtement de ladite plaque polaire négative, le nombre de plaques polaires négatives est d'une plaque de plus que celui desdites plaques polaires positives, de sorte que les plaques polaires les plus à l'extérieur de ladite structure stratifiée sont toutes des plaques polaires négatives.

9. Procédé de production d'une batterie lithium-ion haute capacité à emballage souple selon la revendication 7 ou 8,
**caractérisé en ce que**
ladite plaque polaire positive est de la feuille d'aluminium, ladite plaque polaire négative est de la feuille de cuivre, et ladite languette d'électrode est de la tôle d'aluminium.

10. Procédé de production d'une batterie lithium-ion haute capacité à emballage souple selon la revendication 9,
**caractérisé en ce que**
ladite languette d'électrode est dotée d'un film adhésif thermofusible.
